(19) Europäisches Patentamt
European Patent Office
Office européen des brevets

(11) Publication number: **0 307 205 B1**

(12) **EUROPEAN PATENT SPECIFICATION**

(45) Date of publication of patent specification: **20.04.94**

(51) Int. Cl.⁵: **B29C 61/06**, H05B 3/14

(21) Application number: **88308316.4**

(22) Date of filing: **08.09.88**

# (54) Conductive polymer composition.

(30) Priority: **09.09.87 GB 8721181**
**09.10.87 GB 8723761**
**14.12.87 GB 8729120**
**14.12.87 GB 8729123**
**21.06.88 GB 8814688**

(43) Date of publication of application:
**15.03.89 Bulletin 89/11**

(45) Publication of the grant of the patent:
**20.04.94 Bulletin 94/16**

(84) Designated Contracting States:
**AT BE CH DE ES FR GB IT LI NL SE**

(56) References cited:
**EP-A- 0 197 759**
**EP-A- 0 235 454**
**US-A- 4 388 607**

(73) Proprietor: **RAYCHEM LIMITED**
**Swan House**
**37/39 High Holborn**
**London WC1V 6AA(GB)**

(72) Inventor: **Park, George Barry**
**38 Restrop View**
**Purton near Swindon Wiltshire(GB)**
Inventor: **Baigrie, Stephen Michael**
**104 Ridge Nether Moor**
**Liden**
**Swindon SN3 6NE Wiltshire(GB)**
Inventor: **Jenson, Per**
**Sejroevej 5**
**DK-3550 Slangerup(DK)**
Inventor: **Gansbuehler, George Michael John**
**1 Austen Crescent**
**Liden**
**Swindon Wiltshire(GB)**
Inventor: **Lyons, Bernard John**
**22 Hallmark Circle**
**Menlo Park CA 94025(US)**

(74) Representative: **Auckland, Jacqueline et al**
**Raychem Limited**
**Intellectual Property Law Department**
**Faraday Road**
**Dorcan**
**Swindon, Wiltshire SN3 5HH (GB)**

EP 0 307 205 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to conductive polymeric compositions and articles comprising them.

Conductive polymer compositions comprise a particulate conductive filler, typically carbon black, distributed in a polymer, typically an organic polymer. A number of conductive polymer compositions and devices comprising them are known. Documents describing them include U.S. Patents Nos.
2,952,761, 2,978,665, 3,243,753, 3,351,882,
3,571,777, 3,591,526, 3,757,086, 3,793,716,
3,823,217, 3,858,144, 3,861,029, 3,950,604,
4,017,715, 4,072,848, 4,085,286, 4,117,312,
4,177,376, 4,177,446, 4,188,276, 4,237,441,
4,242,573, 4,246,468, 4,250,400, 4,252,692,
4,255,698, 4,271,350, 4,272,471, 4,304,987,
4,309,596, 4,309,597, 4,314,230, 4,314,231,
4,315,237, 4,317,027, 4,318,881, 4,327,351,
4,330,704, 4,334,351, 4,352,083, 4,388,607,
4,398,084, 4,413,301, 4,425,397, 4,426,339,
4,426,633, 4,427,877, 4,435,639, 4,429,216,
4,442,139, 4,459,473, 4,481,498, 4,476,450,
4,502,929, 4,514,620, 4,517,449, and 4,545,926; J.
Applied Polymer Science 19, 813-815 (1975), Klason and Kubat; Polymer Engineering and Science 18, 649-653 (1978), Narkis et al; German OLS No. 1,634,999; German OLS No. 2,746,602; German OLS NO. 2,821,799; European Application No. 38,718; UK Application No. 2,076,106A, European Application No. 63,440, European Patent Application No. 67,679, European Application No. 74,281, European Application No. 119,807, European Application No. 1,337,48, European Application No. 1,341,145, European Application No. 144187, UK Patent Nos. 1,470,502 and 1,470,503, and European Patent Application No. 175550 and 176284, and Japanese Patent Application no. 57-228,128.

Conductive polymeric compositions having a wide range of resistivities can be prepared. The composition is selected inter alia to give the desired resistivity for the application in question.

It is also known for conductive polymeric compositions to exhibit a PTC (positive temperature coefficient of resistivity) effect, that is a sharp rise in resistivity at a particular, or over a short range of temperatures. This temperature or temperature range is known as the anomaly or switching temperature. The PTC effect minimises overheating and consequent so-called "thermal runaway" of the material. Materials which exhibit the PTC effect are typically referred to simply as PTC materials.

Two typical applications of PTC materials are as heater strips, and as circuit breaker devices. Typically materials for use in heater strips exhibit a room temperature resistivity of about $10^4$ - $10^6$ ohm.cm. Materials for use in circuit-protection devices typically have a much lower room temperature resistivity, for example about 1 ohm.cm. Such circuit protection devices are generally designed so that electrical current flows through a small thickness of conductive polymeric material. This is to minimise the resistance the circuit protection device adds to the circuit.

It is also known that many PTC materials exhibit a so-called "curl-over" effect, that is the resistivity rises rapidly with temperature to a peak resistivity, and then the slope of the resistivity-temperature curve changes. After the peak, the curve may decrease in slope, level-off or fall; (sometimes with a subsequent rise in resistivity).

The use of PTC materials also introduces the problem of hot lining. This is the tendency for a zone of high resistance and consequent high voltage gradient to develop between, and generally parallel to, the electrodes during electrical powering. This problem is discussed in detail in US 4085286 (Horsma/Diaz) which describes a telecommunications splice case.The problem of hot lining is avoided in US 4085286 by using special flexible electrodes, which are planar and arranged on either side of the recoverable sheet. This means that the current flows through the thickness of the sheet, rather than in the plane of the sheet. With this arrangement hot-lining is substantially reduced, but may still occur, especially if the rate of increase of resistivity with temperature is large.

Conductive polymeric compositions may also exhibit NTC behaviour (negative temperative coefficient of resistivity behaviour, i.e. a fall in resistivity on increasing the temperature) or true ZTC behaviour (zero temperature coefficient of resistivity behaviour, i.e. no change in resistivity on increasing temperature).

It is also known that conductive polymer compositions can be made heat-recoverable.

A heat-recoverable article is an article the dimensional configuration of which may be made substantially to change when subjected to heat treatment. Usually these articles recover on heating towards an original shape from which they have previously been deformed, but the term "heat-recoverable", as used herein, also includes an article which on heating adopts a new configuration, even if it has not been previously deformed.

Heat recoverable articles are known. In their most common form, such articles comprise a heat-shrinkable sleeve made from a polymeric material exhibiting the property of elastic or plastic memory as described, for example, in U.S. Patents 2,027,962, 3,086,242 and 3,597,372. As is made clear in, for example, U.S. Patent 2,027,962, the original dimensional heat-stable form may be a transient form in a continuous process in which, for example, an extruded tube is expanded, whilst hot, to a dimensionally heat-unstable form but, in other applications, a preformed dimensionally heat stable article is deformed to a dimensionally heat unstable form in a separate stage.

In other articles, an elastomeric member is held in a stretched state by a second member, which, upon heating weakens and thus allows the elastomeric member to recover. Heat-recoverable articles of this type are described, for example, in British Patent 1,440,524 in which an outer tubular elastomeric member is held in a stretched state by an inner tubular member.

Patent publications describing articles that both comprise conductive polymers and are recoverable include GB 1265194 (Cook), T905001 (U.S. defensive publication to Day), and European Patent Application Publication No. 0157640 (MP922), as well as the above mentioned US 4085286.

Electrically heat-recoverable, conductive polymeric articles made from PTC compositions and suitably electroded to avoid hot-lining are discussed in US 4085386. In these cases the material is typically selected to exhibit a sharp rise in resistivity at, or about, the recovery temperature of the article.

Where conductive polymeric materials that exhibit PTC behaviour are stretched to render them recoverable it is known that this can reduce the height of the anomalous increase in resistivity which occurs above the anomaly temperature. In general it is observed that the height of the anomaly decreases on expansion. This is discussed in European Patent Application, Publication No. 0220003.

A number of features of a conductive polymer composition affect the bulk resistivity of the composition, and also its behaviour on change of temperature. Considering the filler material, for example the carbon black, relevant parameters include primary particle size (hereinafter referred to simply as "particle size"), the surface area of the filler, the structure of the filler, the amount of filler added (loading), the resistivity of the filler per se, and its pH. Considering the polymer, relevant factors include the crystallinity of the polymer, and the extent, if any, to which it has been cross-linked. The structure of a filler inter alia is a measure of its ability to form conductive networks when incorporated into a polymer.

It is understood in the art that electrical conduction through conductive polymer compositions relies on electrical conduction between adjacent filler particles. Thus the bulk conductivity of the material will generally be higher for higher filler contents. Also at a given filler loading, the bulk conductivity of the material will be higher for fillers with larger surface area and higher structure. Also a large surface area, highly structured filler, provided it is present in sufficient loading, would be expected to exhibit a substantially zero temperature coefficient of resistivity since the change in polymer volume caused by the change in temperature will not significantly reduce the number of paths for electrical conduction in the composition. When conductive filler is progressively added to a polymeric material, the resistivity of the composition generally decreases. This is because more paths for electrical conduction are formed. Beyond a certain critical filler loading, which is different for each composition, the resistivity effectively stabilises. Thus, there is a critical concentration of filler below which the resistivity of the composition increases sharply, and above which the resistivity of the composition is little affected by changes in the filler loading. This critical concentration is hereinafter referred to as "the critical filler loading". The critical filler loading varies according to the composition. Typically it is at a lower concentration for higher surface area, more highly structured fillers. Also the resistivity of the composition at the critical filler loading varies according to the composition. Typically the resistivity at the said loading is lower for higher surface area, higher structured fillers.

It is to be understood that the general trends of resistivity behaviour described above according to the properties of the filler material are generalisations. Other factors will be operative in any particular composition, including interactions between the polymer and the filler materials.

It is felt that it is worth noting the general trends to understand the electrical behaviour of the compositions, notwithstanding that there are exceptions to the trend. The technical analysis presented in this specification is not to be construed as limiting the invention in any way.

At least where the filler is carbon black the surface area of the filler is measured by nitrogen absorption according to ASTM D 3037-86.

At least where the filler is carbon black, the structure of the filler is measured by dibutyl phthalate absorption according to ASTM D2414-86.

For terminology relevant to carbon-black filled conductive filler compositions, including information relevant to measurement of particle size, reference should be made to "Analysis of Carbon Black" by Schubert, Ford and Lyon, Vol 8, Encyclopedia of Industrial Chemical Analysis (1969), 179, published by John Wiley and Son, New York.

We have discovered a particular set of conductive polymer compositions which comprise carbon black filler of a particular surface area and structure which make it particularly suitable for use in electrically self-heatable heat-recoverable articles. The compositions are particularly suitable in such articles which are laminar, and are electroded so that conduction is substantially parallel to the faces of the article.

Articles according to the invention are laminar. The term "laminar" is used to include any article in which the conductive polymer compositions have two dimensions which are much larger than the third dimension. Thus a laminar article can be planar, or cylindrical, including tubular articles of open (wraparound) or closed cross section. When tubular articles are used they may be open at one or both ends.

At least preferred compositions according to the invention exhibit a particular pseud-PTC effect, (as hereinafter defined) and a decrease in resistivity on expansion and an increase on recovery (independent of and additional to any increase in resistivity on recovery resulting from the pseud-PTC effect). This previously undisclosed combination of electrical characteristics provides significant advantages in the present invention.

The compositions according to the invention comprise a particular selection of carbon black(s), the advantages of which have not previously been foreseen. The surface area and structure of the carbon blacks used in compositions according to the invention are generally intermediate in value given the total range of carbon blacks available.

Previously, where it was desired to make a PTC composition, for use to prevent thermal runaway, it was typical to select a carbon black from the larger end of the particle size range to achieve the PTC effect. Also where it was desired to achieve a low resistivity it was typical to select a high surface area, highly structured carbon black to achieve high conductivity. The use and advantage of the particular selection of carbon black fillers according to the present invention is new.

Accordingly the present invention provides a heat recoverable conductive polymer composition comprising:

(a) at least one matrix polymer and

(b) one or more carbon blacks dispersed in said matrix polymer(s) and comprising 15-60% by weight of the polymer composition wherein

(i) the surface are (A) of the carbon black, or where there are two or more carbon blacks, the geometric mean of the measured surface areas of the carbon blacks is in the range 40-400 $m^2g^{-1}$, and

(ii) the ratio of the DPBA value (D) in $cm^3/100g$ to the average particle size (s) in nm, or where there are two or more carbon blacks, the ratio of the arithmetic mean of their DPBA values to the arithmetic mean of their particle sizes is in the range 2.5 to 10.

The surface area and the structure of the carbon black are measured as defined in the above mention ASTM standards.

Where there are two or more carbon blacks having a surface area $A_1$, $A_2$, $A_3$, ......An ($m^2g^{-1}$), where n is the number of carbon blacks, a particle size $S_1$, $S_2$, $S_3$, .......Sn (nm) and a DBPA value $D_1$, $D_2$, $D_3$, ....... Dn ($cm^3/100g$) and said n carbon blacks are in concentrations $C_1$, $C_2$, $C_3$,.......... Cn, and the total carbon black concentration is given by C, then

(i) the geometric mean of the surface areas of the carbon blacks is given by:

$$\log \bar{A} = \frac{C_1}{C}\log A_1 + \frac{C_2}{C}\log A_2 + \frac{C_3}{C}\log A_3 \ldots + \frac{C_n}{C}\log A_n \text{: and}$$

(ii) the ratio of the arithmetic means of the DPBA and particle size values is given by

$$\frac{\bar{D}}{\bar{S}} = \frac{C_1D_1 + C_2D_2 + C_3D_3 + \ldots\ldots C_nD_n}{C_1S_1 + C_2S_2 + C_3S_3 + \ldots\ldots CnSn}$$

Preferably the measured surface area A of the carbon black (or geometric mean $\bar{A}$ for two or more carbon blacks) is in the range 40 -300, more preferably 40-260, most preferably 40-225. Preferably the ratio D/S for the carbon black, or the ratio of the arithmetic means $\bar{D}/\bar{S}$ for two or more carbon blacks has an upper limit of 8, or 7.5; preferably the lower limit of the said ratio is 3.5.

Carbon black is preferably loaded to a sufficient volume fraction in a polymer matrix to provide a composition having a resistivity of less than 25 ohm.cm. The actual amount of the or each carbon black required will depend on the resistivity of the or each carbon black per se, and the nature, in particular the crystallinity, of the matrix polymer. Typically the carbon black content will be in the range 15-60% by weight, preferably 25-60 % by weight, more preferably 25-50% by weight. Increasing the carbon black content decreases the resistivity of the composition, but has a deleterious effect on the mechanical properties of the composition.

At least one carbon black used in the composition is preferably not a channel black, or any other carbon black having an outer oxide layer. Channel blacks typically have, and other carbon blacks sometimes have, a substantially oxidised insulating layer on their outer surface. This layer significantly increases the resistivity of compositions containing such blacks, and such compositions are not desirable in the present invention. The oxidised layer can, however, be removed by suitable treatment, and in this case the resistivity of compositions containing such treated carbon blacks with a previous oxidised layer is decreased. Compositions containing carbon blacks which previously had, but no longer have, an outer oxide layer may be acceptable in the present invention. A description of the chemistry of channel blacks, a typical carbon black having such an oxide layer, is found on page 114 of "Carbon Black, Physics, Chemistry and Elastomer Reinforcement" by Donnet and Vole, Marcel Dekkar Inc 1976 NY.

We have found that compositions according to the invention can be particularly advantageous for use in laminar (as hereinbefore defined) electrical articles which are electroded such that, when connected to an electrical power source, current flows substantially parallel to the faces of the article, and which are electrically heated, by passage of electrical current through the articles. Where such articles comprise traditional PTC materials they are prone to the problems of hot-lining as described above. Also, where the articles comprise traditional ZTC materials there may be problems of runaway heating especially if recovery is non uniform. As an example of non-uniform recovery, one region of the article may recover before another region of the article bringing the electrodes in that region closer together. The current path in that region is therefore shortened and hence the electrical resistance lowered. Electrical current is therefore preferentially shunted to that region and there is the possibility of runaway heating.

For convenience of powering, intrinsically heated, heat-recoverable articles preferably have a relatively low room temperature resistivity so that low voltage supplies can be used to effect recovery. Preferably compositions according to the invention have a resistivity at 25 °C less than 25 ohm.cm, more preferably less than 15 ohm.cm, especially preferably less than 10 ohm.cm. For certain applications compositions having a resistivity at 25 °C of less than 5 ohm.cm, e.g. about 2 ohm.cm are preferred.

Preferably at least one of the carbon blacks used has a volatile content of less that 2%, especially less than 1.5%.

Preferred embodiments according to the invention comprise a composition according to the invention and at least two electrodes which can be connected to a source of electrical power to cause electrical current to flow through the composition, to heat and recover the composition.

Particularly preferred articles according to the invention are tubular articles comprising a composition according to the invention with at least one pair of longitudinal electrodes, extending at least part way along the length of the tube. The tubular articles may be closed or open in cross-section, and the term includes wraparounds. In such articles electrical connection is preferably such that current flows circumferentially around the tube, to cause the recovery. There are thus two separate current paths between the electrodes. Articles in which the composition according to the present invention is particularly suitable are described in European Patent Application, publication numbers 0307206, 0307200, 0307199, 0307197 and 0307198.

European Patent publication 0307206 describes a heat-recoverable article (preferably tubular), which comprises electrically conductive recoverable material, and is provided with at least two integrally formed spaced apart support elements for supporting electrodes. The support element also comprise electrically conductive material and are dimensionally heat stable. This means that they remain substantially under formed during recovery other than bending to accommodate transitions. This arrangement ensures that good contact between the electrode and the article is maintained throughout recovery of the article.

European Patent Application, publication no. 0307200 describes a heat recoverable conductive polymeric, preferably tubular article with longitudinal electrodes extending part way only along its length. The composition according to the present invention is preferred for this article since its electrical properties prevent overheating at the electrode ends.

European Patent Application, publication no. 0307199 describes a tubular conductive polymeric article which has particular application as a duct seal, and which increases in thickness on recovery.

European Patent Application, publication no. 0307197 describes a tubular article which is preferably heat-recoverable and which can apply a radially inward force to a substrate therein. This can be used to join or repair a substrate e.g. a cable or a pipe. It can for example melt a polymeric patch to effect the join or repair. It is preferably multi-part or wrap-around for easy installation.

European Patent Application, publication no. 0307198 describes a tubular conductive polymeric heat recoverable article with electrodes interrupted along its length, allowing separate longitudinal sections to be powered independently.

The compositions according to the present invention preferably exhibit a small increase in resistivity on increase in temperature. This is referred to hereinafter as a pseudo PTC effect. The term "Pseudo" is used since although there is an increase in resistivity it is significantly less than that exhibited by materials traditionally referred to as PTC, and is not to be confused therewith. The composition is selected such that the pseudo PTC effect:

(a) encourages uniform heating of an article, electroded and powered to recovery:

(b) moderates the problem of runaway heating seen with ZTC materials; and

(c) is not sufficiently PTC to invoke hot-lining, even when the article is laminar and is powered so that current flows substantially parallel to the faces of the article.

Preferably the pseudo PTC ratio, (as herein defined) of the recoverable material is in the range 1½ to 50 more preferably in the range 1½ to 10, preferably in the range 2½ to 5 especially 3. The preferred PTC ratios are especially preferred for materials that have been expanded 25% - 500% (1.25X-6X), especially 25% - 300% (1.25X-4X), more especially 50%-150% (1.5X-2.5X).

As described before where a material exhibits a PTC effect it exhibits a curl over effect, that is it reaches a peak after which the resistivity/temperature curve changes its slope. After the peak the curve may decrease in slope, level-off, or fall in resistivity, sometimes with a subsequent rise in resistivity. For the pseudo-PTC materials defined herein, the pseudo PTC ratio is defined as the ratio of the "peak" resistivity to the resistivity at 25 °C of the material. The peak resistivity is the highest resistivity where curl-over with a decrease in resistivity occurs (referred to herein as negative curl-over), or the point of inflecton, where a subsequent rise occurs (referred to herein as positive curl-over).

Compositions according to the invention are preferably melt processed.

Resistivity/temperature curves by which the quoted pseudo PTC ratio measurements are calculated are obtained using the following method.

Test samples of the unexpanded, cross-linked material are cut in the form of dumb-bells. These are clamped at the ends in suitable expansion equipment and heated to a temperature above the peak $T_m$ of the composition e.g. $T_m$ + 100 °C, (where $T_m$ is measured according to ASTM D3418-82). They are then expanded by moving apart the clamps to stretch the central, necked region of the dumb-bell in a uniform manner. The material is then allowed to cool to room temperature whilst held in the expanded state, thus "freezing in" the expansion. Expansion ratio is measured by the movement of marks positioned on the surface of the dum-bell in the region of uniform expansion.

Silver paint electrodes are then applied to one face of the sample over the entire area, except for a ½ inch wide region in the centre of the expanded portion which forms the area under test. The paint is allowed to dry for 24 hours.

The samples are mounted in a test rig using metal clamps that hold the samples clamped such that they cannot move or recover during the test cycle.

The samples are then mounted in a programmable oven and connected to a computer controlled data acquisition system. A four wire technique is used to minimise the effects of the lead resistances. Connection is via the metal clamps.

The oven is a fan assisted unit for good temperature uniformity and has cooling by means of liquid nitrogen or carbon dioxide in order to give controlled rates of heating and cooling.

The programmed temperature cycle is approximately as follows:

(1) Cool to 10 °C.
(2) Hold for 20 minutes.
(3) Heat to 200 °C at 2 °C/min.
(4) Hold for 20 minutes.
(5) Cool to 10 °C at -2 °C/min.

The resistance of the samples is electronically scanned throughout the cycle at every 2 °C.

At the end of the test these data are converted to resistivity using the length, width and thickness of the sample and then plotted out as a graph of resistivity against temperature.

The preferred PTC ratio ranges quoted above e.g. 1½ - 50, especially 1½ to 10 etc. are for the composition at least in its recoverable state. Such a material has already been heated once in order to deform the material to render the composition recoverable. This distinction is important since the initial heating to deform step may significantly alter the behaviour of the material, seen on subsequent heating. Thus the PTC ratios quoted are from resistivity vs temperature curves measured during heating of materials that have already been heated once in the expansion process.

When the composition according to the invention is in a heat recoverable article, the pseudo PTC effect of the composition has no effect on the initial current flow through the article (since all parts are then at the same temperature). However it does affect the magnitude and distribution of current flow during recovery as the article heats with the result that current is shunted from the hotter regions.

The composition according to the invention preferably has a resistivity measured at any particular temperature that increases on recovery. This resistivity increase occurs at any given temperature in the range 20 °C to $T_e$ (where $T_e$ is the extrapolated end temperature as measured according to ASTM D3418-82).This resistivity increase is additional to any resistivity change that occurs on recovery as a result of the pseudo PTC effect. The resistivity change is believed to result from changes in the conductive particle network formed by the filler particles in the composition during the recovery process. When the composition is used in a recoverable article this increase in resistivity on recovery, in addition to the pseudo PTC effect tends to shunt current away from the first or more recovered parts during the recovery process.

Articles comprising compositions according to the invention and having the electrical properties of articles described in European Patent Application EP-A-0307207 are preferred.

Such articles comprise a laminar article at least part of which has been expanded from X% to Y% to make it heat recoverable, the article comprising a conductive polymeric material the resistivity of which decreases on expansion, as measured in the direction of current flow, in at least part of the X-Y% expansion range.

X may be zero or finite, and Y is greater than X.

Another article disclosed in EP-A-0307207 comprises a laminar article at least part of which is heat recoverable, comprising a conductive polymeric material which has a resistivity which increases on recovery, as measured in the direction of current flow, throughout the temperature range 20 °C to $T_e$ (as hereinbefore defined). Other articles according to that invention have a pseudo PTC ratio (peak resistivity/resistivity at 25 °C) in the range 1½ to 10, and are connected to electrodes so that current flows parallel to the faces of the article. Preferably the articles are expanded to render them recoverable, and the resistivity of the compositions of the articles decreases in at least part of the expansion range when expanded by 25% or more.

Preferably the composition according to the invention is expanded to render it recoverable. Preferably the resistivity of the material decreases in at least part of the expansion range, on expansion. This resistivity decrease on expansion permits one to make articles, only portions of which are expanded, and which will recover when connected to a source of electrical power without excessive overheating of unexpanded regions. The preferential expansion can be arranged so that the initial pre-recovery resistivity of parts of the article is different, so that initially current is shunted to certain (lower resistivity) parts. For preferred compositions the resistivity decrease on expansion is reversible i.e. it increases again on recovery, acting to shunt current away from the first or most recovered parts on recovery.

The compositions according to the invention are particularly useful in articles which recover non-uniformly where the geometry changes occurring during recovery would otherwise tend to concentrate the predominant flow of current in one region, risking overheating etc. In these cases, employing the electrical characteristics of the composition to shunt the current away from any such region is advantageous. Uneven recovery may occur for a number of reasons, of which some examples are now given. A first example is an article that is an irregularly shaped part, for example a tubular article which varies in cross-section or in cover thickness along its length. A second example is an article, which may be irregularly shaped or not, that is recovered onto an irregularly shaped substrate, e.g. not a flat surface or a regular tube. A third example is when ambient conditions (pressure and temperature etc) cause some parts of the article to recover before others. Such non-uniform recovery is exacerbated where recovery ratios are greater than 10%, especially greater than 50%, for example greater than 100%.

The non uniform recovery presents particular problems if it causes geometry changes to the part which concentrate the current in the most recovered parts, for example if the electrode separation decreases and/or the cover thickness increases on recovery, both of which reduce the resistance between the electrodes. In these cases the electrical characteristics of the material of the invention can be designed to compensate, at least in part, for the geometry changes in the part.

The resistivity of the cover material preferably decreases when deformed, for example expanded from X% to Y% where X may represent the typical residual recovery in the article after installation. Preferably the resistivity decreases when expanded more than 25%. The resistivity/expansion curve may show an initial upward slope when expanded from 0%, but preferably has a negative slope for some range of expansion greater than 25%.

The resistivity also typically changes with temperature, so that there is a 3-dimensional relationship between resistivity, expansion and temperature. Preferably, for the composition, the resistivity after expansion is less than the resistivity after or during recovery for expansion ratios of 25-600% especially 25-500%, over the temperature range of -30 °C to +200 °C, especially 20 °C to $T_e$ (as hereinbefore defined). This behaviour shunts the current flow to avoid concentrations of electrical current during recovery.

It has been found that the compositions according to the invention can advantageously provide the preferred pseudo PTC and resistivity/expansion/recovery behaviour described above, making them particularly suitable for intrinsically heatable laminar recoverable articles electroded so that current flows substantially parallel to the faces of the article.

The compositions according to the invention contain carbon black having a surface area and structure that is generally intermediate in value, given the total range of carbon blacks available. Carbon black with surface area and structure at the lower end of the range would typically be more PTC and hence could present problems of hot lining. Also compositions containing such lower surface area and lower structure fillers, even in concentrations above the critical filler loading, would generally have relatively high resistivities, necessitating high voltage sources to effect heating and recovery. Compositions containing carbon blacks with surface area and structure at the higher end of the range would tend to be ZTC with the consequent problems of runaway heating. Also the applicants have observed that higher surface area, higher structured materials typically exhibit an increase in resistivity on expansion.

The quantity of carbon black in the polymeric composition is preferably above the critical filler concentration for the composition. The critical filler concentration is that concentration below which the resistivity of the composition is very sensitive to even small changes in filler concentration and above which the resistivity is much less affected by small changes in concentration. It is well known in the art that if a graph is constructed of the resistivity, or more usually the logarithm of the resistivity, of a composition against the concentration of the conductive filler, a characteristic knee is seen in that portion of the curve corresponding to the critical filler concentration.

Using a composition in which the quantity of carbon black is above the critical filler concentration advantageously increases the reproducibility of the composition, since small changes in the carbon black loading do not significantly affect the resistivity. It is also believed to affect the preferred pseudo-PTC behaviour exhibited by compositions according to the invention. If the filler loading is less than the critical filler concentration a small change in the volume concentration of filler generally results in a large change in the resistivity of the composition. A rise in temperature typically increases the volume of the polymeric matrix of the composition (by expansion of the polymer) and hence affects the filler volume concentration. Thus it is preferred that the compositions contain greater than the critical filler concentration in order that they do not exhibit a significantly large PTC effect. Preferably the choice of polymer and carbon black is such that the carbon black can be present in a number of different concentrations, all of which provide a composition having a resistivity less than 25 ohm.cm, preferably less than 15 ohm.cm. Preferably the composition contains N parts by weight carbon black and a change in the carbon black content from N to N plus or minus 5 parts by weight changes the resistivity of the composition by less than 5 ohm.cm.

The amount of carbon black in the composition to achieve the desired resistivity and preferred pseudo PTC and resistivity/expansion behaviour is typically in the range 20-60 parts by weight. Where the carbon black or black mix has a high average surface area, or where the polymer is highly crystalline, loadings in the lower half of the range 20-60 parts by weight eg 20-40 parts by weight may be preferred. Thus the amount of carbon black used is another feature, which in combination with the choice of carbon black and polymer can be selected to obtain the desired electrical characteristics.

Other factors affect the behaviour of the composition. For example the pH of the carbon black. As a general trend, for a given concentration, markedly acidic or basic carbon blacks produce higher resistivity compositions than more nearly neutral carbon blacks. Preferred compositions according to the present invention have a pH in the range 5 to 8. Highly acidic carbon blacks generally have an oxidised surface and are not preferred.

For the recoverable compositions according to the invention the slope of the resistivity temperature curve after the peak resistivity is preferably greater than zero (i.e. the curve preferably levels or continues to rise). If the resistivity falls after the peak, it is preferred that, at a temperature 50 °C higher than the temperature of the peak resistivity, the resistivity is preferably within 35%, more preferably within 15% of the value of the peak resistivity. This is advantageous in order to minimise the possibility of thermal runaway.

Preferred conductive polymeric compositions according to the invention are cross-linked for example by irradiating with high energy electrons to a beam dose in the range 2 - 35 MRads, especially 2 - 25 MRads, for example 10 or 15 MRads. Cross-linking enhances the recoverable behaviour of the material.

Cross-linking may also be effected chemically. For moulded articles comprising compositions according to the invention, a single step process may be used to mould and cross-link the composition. Such parts formed by moulding e.g. transfer moulding or injection moulding can have complex shapes.

The degree of cross-linking of the cross-linked polymeric matrix of the composition (i.e. excluding the conductive filler or any other non polymeric additives present) may be expressed in terms of gel-content (ANSI/ASTM D 2765-68). Preferably the gel content of the polymeric matrix is at least 5% preferably at least 10% more preferably at least 20%, e.g. at least 30%, more preferably at least 40%, or even at least 50%.

The polymeric matrix component of the composition is preferably a thermoplastic polymer, a mixture of thermoplastic polymers or a combination of one or more thermoplastic polymers and an elastomer. At least one of the thermoplastic polymers is preferably crystalline or at least partly crystalline, for example having a crystallinity of at least 1%, preferably at least 3%, especially at least 10%, for example at least 20%.

The crystallinity of the polymer affects the electrical characteristics of the composition. For example. for a specific loading of a specific carbon black in a matrix polymer, the higher the crystallinity of the polymer the lower the resistivity of the composition, as the critical loading is reached at a lower percentage of filler.

Any suitable polymeric material can be used for the polymeric matrix of the conductive composition. As examples of suitable polymers, there may be mentioned ethylene polymers and copolymers, polymers and copolymers of alpha-beta ethylenically unsaturated olefins, esters, polyesters, both aliphatic and partly aromatic, thermoplastic elastomers such as block copolymers of polyethers and polyesters, fluorinated polymers such as those derived from vinylidine fluoride, ethylene-tetrafluoroethylene and -chlorotrifluoroethylene copolymers, especially those which are substantially alternating, including those which contain small amounts of a third fluorinated monomer, propylene-tetrafluoroethylene copolymers, and block copolymers of polyvinylidene fluoride or ethylene-tetrafluoroethylene polymers with fluorinated elastomers based on vinylidine fluoride or propylene-tetrafluoroethylene copolymers.

Fillers, both conductive and/or non-conductive, other than carbon black may be incorporated in compositions according to the invention. Such fillers may include flame retardants, thermal stabilisers, antioxidants and acid acceptors, for example.

A series of conductive polymer compositions comprising a polymeric matrix and a carbon black filler or a combination of two carbon blacks were prepared. Each composition was prepared using a K.O. Intermix, an internal mixer of approximate charge size of one litre. The mixing conditions were set to produce homogeneous materials in minimum time. The compositions were numbered "compound nos 1-44" and their components parts are listed in tables 1a to 1c, which are at the end of this description. Compounds 1-35 each comprise one carbon black, and compounds 35-44 a mixture of two carbon blacks.

In tables 1a-1c ELVAX, MARLEX, SCLAIR, STAMYLEX and HYTREL, which are all polymeric resins, are trademarks. The polymeric nature and supplier of each resin are given in table 3, which is at the end of this description.

In table 1 VULCAN, STATEX, ELFTEX, PRINTEX, ENSACO, KETJEN CONDUCTEX, SEVALCO and LUVOCARB are trademarks. They are supplied by the following companies:
VULCAN to Cabot (UK) Ltd.
ELFTEX to Cabot (UK) Ltd.
STATEX to Columbian (UK) Ltd.
CONDUCTEX to Columbian (UK) Ltd.
PRINTEX to Phillips Petroleum.
ENSACO to Ensagri Willebroek NV
KETJEN to Akzo Chemie (UK) Ltd.
SEVALCO to Columbian (UK) Ltd.
LUVOCARB to Lehmann und Voss AG
Acetylene black is supplied by VEB Stickstoffwerk Piesteritz.

The surface area A, D/S values, and resistivity at 25 °C, for each composition are indicated in tables 2a-2c which are at the end of this description. It will be seen that compositions 1-19 and 33-44 lie within the scope of the present invention while examples 20-32 do not. This is indicated in the last column in Tables 2a-2c. Compounds 20 and 21 have too high resistivity at 25 °C (at all expansions). These are channel blacks. Compounds 22-29 have A and D/S values below the minimum limits according to the invention.

Compounds 30-32 have A and D/S values above the maximum limits according to the invention. It will be seen that all the compositions according to the invention exhibit a pseudo PTC ratio (at least at one expansion value) within the desired range 1½ to 10. Also, for these compositions, it will be seen, by comparing the resistivities at 1.5X, 2X and 3X expansion that the resistivity generally decreases on expansion in most cases.

Values of PTC ratio at 1.5X, 2X and 3X for compound no 26 and for compound no 27 were not measurable using the equipment used for the other compounds since their volume resistivities were significantly higher. Compounds 30 and 31 could not be expanded 2X or more, and compound 33 could not be expanded 3X. Physical properties were poor for these compounds with low elongations at the expansion temperature.

Examples 33 to 35 show the same carbon black (Vulcan P) in a number of different concentrations (30,40,50 parts by weight) in the same polymer (ELVAX 770). In each case a composition with the preferred resistivity, PTC ratio and resistivity/expansion behaviour is achieved.

Examples 36 to 44 show compositions where a mixture of carbon blacks are used. Example 42 shows an example where each carbon black alone (KETJEN EC300 and STATEX N650) has a surface area outside the range of the present invention. However their average surface area is within the invention, and the composition achieved has the desired properties.

Figures 1-3 and 7-8 are resistivity-temperature curves for compositions according to the present invention, by way of example; and Figures 4-6 are resistivity-temperature curves for compositions outside the invention, by way of comparision. Figures 9 shows the loading curve for VULCAN P in various polymers. Figure 10 shows the loading curve for VULCAN P in ELVAX 770.

Figures 1 and 2 show the resistivity-temperature curves for compounds 1 (39.6 parts by weight VULCAN P in 59.4 parts by weight ELVAX 460) and 10 (39.6 parts by weight Conductex 975 in 59.4 parts by weight ELVAX 460) respectively, expanded 1.5X 2X and 3X.

Figure 3 shows, superimposed, the resistivity-temperature curves for compounds 9 (39.6 parts by weight Conductex 900 in 59.4 parts by weight ELVAX 460) and 10 (39.6 parts by weight Conductex 975 in 59.4 parts by weight ELVAX 460) expanded 2X. Both compounds comprise the same polymer matrix and the same loading of carbon black. The carbon black in compound 9 has a surface area of 125 $m^2/g$ and the carbon black in compound 10 has a surface area of 250 $m^2/g$. It will be seen that the PTC ratio and the room temperature resistivity are less for compound 10 than for compound 9.

Figure 4 shows the resistivity-temperature curve for compound 20 (39.6 parts by weight Luvocarb MPC in 59.4 parts by weight Elvax 460) expanded 2X. Compound 20 comprises Luvocarb MPC, a channel black. It will be seen that its PTC ratio is outside the range of the present invention. Also its volume resistivity at room temperature is outside the range of the present invention. This particular channel black has a highly oxidised outer surface which contributes to the high resistivity and also to the high PTC ratio.

Figure 5, 6 and 7 show the show the resistivity-temperature curve for compounds 24 (29.8 parts by weight Statex N650 in 69.7 parts by weight Marlex HXM 50100) 31 (29.8 parts by weight Ketjen EC300 in 69.7 parts by weight Marlex HXM 50100) and 42 (14.9 parts by weight of each of Ketjen EC300 and Statex N650 in 69.7 parts by weight of Marlex HXM 50100 each expanded 1.5X. Statex N650 has a surface area and D/S value below the limits required by the present invention. Compound 24 exhibits typical PTC behaviour (Figure 5), the peak resistivity being greater than $10^8$ ohm.cm. Ketjen EC300 has a surface area and D/S value above the limits required by the present invention. Compound 31 exhibits substantially ZTC behaviour. It has a PTC ratio at 1.5X expansion of 1.29 i.e. below the preferred ratio for the present invention. Compound 39 comprises 15 parts by weight of each of the carbon blacks contained in compounds 24 and 31 (i.e. the same total carbon black concentration). This compound has a mean surface area and $\overline{D}/\overline{S}$ value within the limits of the present invention. It also exhibits a pseudo-PTC effect according to the present invention. The PTC ratio for compound 39 at 1.5X expansion is 1.54.

Figure 8 shows the resistivity temperature curves for compound 3 (39.6 parts by weight Vulcan P, in 59.4 parts by weight Marlex HXM 50100) expanded 1.5X, 2X and 3X. This composition shows a PTC ratio in the preferred range 1½ to 10 and a resistivity which decreases with expansion. Figure 8 is interesting when compared with Figure 1 (resistivity vs temperature curve for compound 1, 39.6 parts by weight Vulcan P in 59.4 parts by weight Elvax 460). Both compositions contain the same amount of the same carbon black. They differ only in the matrix polymer used. Compound 1 (Figure 1) uses Elvax 460, while compound 3 (Figure 8) uses a more crystalline polymer, Marlex HXM 50100. The resistivity at any given temperature and expansion ratio is less for the composition containing the more crystalline polymer. Also the pseudo PTC effect is different. The rise in resistivity as a function of temperature is sharper for the more crystalline polymer.

Figure 9 shows the logarithmic loading curves (parts by weight of carbon black vs resistivity) for Vulcan P in three different polymers. The polymers in order of decreasing crystallinity are Marlex HXM 50100, Elvax 770 and Elvax 460. It can be seen that the curve is shifted to a region of lower resistivity and parts by weight by increasing the crystallinity of the polymer. Thus, for a given carbon black loading, the resistivity of the composition is lowered by increasing the crystallinity of the polymer. For example for 40 parts by weight loading of Vulcan P, the resistivity of the composition formed with Elvax 460 is approximately 3.4 ohm.cm with Elvax 770 is approximately 2.2 ohm.cm, and with Marlex HXM50100 is approximately 1.3 ohm.cm. Also preferably the carbon black loading is well above the critical point (ie the knee) in the loading curve, so that variations in the carbon black loading of say plus or minus 5 parts by weight do not significantly affect the resistivity. The critical point in Elvax 460 is approximaely 25 parts by weight Vulcan P, in Elvax 770 is approximately 25 parts by weight Vulcan P, and in Marlex HXM 50100 is approximately 20 parts by weight Vulcan P. Thus increasing the crystallinity of the polymer, allows lower loadings of carbon black to be used to achieve similar volume resistivity values. The critical loading point will vary for a given polymer with the type of carbon black used, typically being at lower loadings for more highly structured or higher surface area blacks.

Figure 10 shows the loading curve (parts by weight carbon black vs resistivity) for Vulcan P in Elvax 770. It should be noted that this is plotted on a non-logarithmic scale. It can be seen that at low loading (less than approximately 28 parts by weight) the resistivity is too high to be useful according to the invention but that there is a large range of compositions over which the resistivity is less than 25 ohm cm, and even a large range (32-60 parts by weight) where the resistivity is less than the preferred 10 ohm cm. Furthermore within this range the curve is very flat so that a small eg 5 parts by weight variation in the carbon black content (which may occur during manufacturing) does not significantly affect the resistivity of the composition. This improves the reproductibility of a composition with consistent properties. Composition 34, which is preferred, comprises 40 parts by weight Vulcan P in 59 parts by weight Elvax 770. This has a resistivity at 25°C of 2.9 ohm cm. Varying the carbon black content by plus or minus 5 parts by weight varies the resistivity from about 4.6 ohm cm (35 parts by weight Vulcan P) to 1.25 ohm cm (45 parts by weight Vulcan P i.e. by a small amount. This means that manufacturing variation can be tolerated without significantly affecting the properties of the invention.

In the present specification the terms percent by weight and parts by weight are equivalent.

TABLE 1a

| COMPOUND NO | POLYMER RESIN | RESIN PARTS BY WEIGHT | CARBON BLACK | BLACK PARTS BY WEIGHT | ANTIOXIDANT PARTS BY WEIGHT |
|---|---|---|---|---|---|
| 1 | ELVAX 460 | 59.4 | VULCAN P | 39.6 | 1.0 |
| 2 | HYTREL 4056 | 59.4 | VULCAN P | 39.6 | 1.0 |
| 3 | MARLEX HXM 50100 | 59.4 | VULCAN P | 39.6 | 1.0 |
| 4 | MARLEX HXM 50100 | 62.5 | VULCAN P | 36.5 | 1.0 |
| 5 | STAMYLEX 2H286 | 59.4 | VULCAN P | 39.6 | 1.0 |
| 6 | SCLAIR 11D-1 | 59.4 | VULCAN P | 39.6 | 1.0 |
| 7 | ELVAX 460 | 59.4 | SEVALCO N110 | 39.6 | 1.0 |
| 8 | MARLEX HXM 50100 | 59.4 | SEVALCO N110 | 39.6 | 1.0 |
| 9 | ELVAX 460 | 59.4 | CONDUCTEX 900 | 39.6 | 1.0 |
| 10 | ELVAX 460 | 59.4 | CONDUCTEX 975 | 39.6 | 1.0 |
| 11 | SCLAIR 11D-1 | 59.4 | ENSACO MS | 39.6 | 1.0 |
| 12 | ELVAX 460 | 54.0 | ENSACO MS | 45.0 | 1.0 |
| 13 | MARLEX HXM 50100 | 59.4 | ENSACO MS | 39.6 | 1.0 |
| 14 | MARLEX HXM 50100 | 59.4 | SEVALCO N220 | 39.6 | 1.0 |
| 15 | ELVAX 460 | 59.4 | ACETYLENE BLACK P1250B | 39.6 | 1.0 |
| 16 | MARLEX HXM 50100 | 59.4 | ACETYLENE BLACK P1250B | 39.6 | 1.0 |

TABLE 1b

| COMPOUND NO | POLYMER RESIN | RESIN PARTS BY WEIGHT | CARBON BLACK | BLACK PARTS BY WEIGHT | ANTIOXIDANT PARTS BY WEIGHT |
|---|---|---|---|---|---|
| 17 | ELVAX 460 | 59.4 | VULCAN XC-72 | 39.6 | 1.0 |
| 18 | MARLEX HXM 50100 | 59.4 | VULCAN XC-72 | 39.6 | 1.0 |
| 19 | MARLEX HXM 50100 | 59.7 | SEVALCO N550 | 39.8 | 0.5 |
| 20 | MARLEX HXM 50100 | 59.4 | LUVOCARB MPC | 39.6 | 1.0 |
| 21 | ELVAX 460 | 59.4 | LUVOCARB MPC | 39.6 | 1.0 |
| 22 | MARLEX HXM 50100 | 59.4 | LAMP BLACK LUVOCARB PM16E | 39.6 | 1.0 |
| 23 | ELVAX 460 | 59.4 | LAMP BLACK LUVOCARB PM16E | 39.6 | 1.0 |
| 24 | MARLEX HXM 50100 | 69.7 | STATEX N650 | 29.8 | 0.5 |
| 25 | ELVAX 460 | 69.7 | STATEX N650 | 29.8 | 0.5 |
| 26 | ELVAX 460 | 59.4 | THERMAX N990 | 39.6 | 1.0 |
| 27 | MARLEX HXM 50100 | 59.4 | THERMAX N990 | 39.6 | 1.0 |
| 28 | ELVAX 460 | 59.4 | ELFTEX 120 | 39.6 | 1.0 |
| 29 | MARLEX HXM 50100 | 59.4 | ELFTEX 120 | 39.6 | 1.0 |
| 30 | MARLEX HXM 50100 | 69.7 | PRINTEX XE 2 | 29.8 | 0.5 |
| 31 | MARLEX HXM 50100 | 69.7 | KETJEN EC300 | 29.8 | 0.5 |

TABLE 1c

| COMPOUND NO | POLYMER RESIN | RESIN PARTS BY WEIGHT | CARBON BLACK | BLACK PARTS BY WEIGHT | ANTIOXIDANT PARTS BY WEIGHT |
|---|---|---|---|---|---|
| 32 | ELVAX 460 | 69.7 | KETJEN EC300 | 29.8 | 0.5 |
| 33 | ELVAX 770 | 69.0 | VULCAN P | 30.0 | 1.0 |
| 34 | ELVAX 770 | 59.0 | VULCAN P | 40.0 | 1.0 |
| 35 | ELVAX 770 | 49.0 | VULCAN P | 50.0 | 1.0 |
| 36 | ELVAX 460 | 59.4 | VULCAN P<br>KETJEN EC300 | 35.6<br>4.0 | 1.0 |
| 37 | ELVAX 460 | 59.4 | VULCAN P<br>KETJEN EC300 | 29.6<br>10.0 | 1.0 |
| 38 | MARLEX HXM 50100 | 59.4 | VULCAN P<br>KETJEN EC300 | 35.6<br>4.0 | 1.0 |
| 39 | SCLAIR 11D-1 | 59.4 | VULCAN P<br>KETJEN EC300 | 35.6<br>4.0 | 1.0 |
| 40 | ELVAX 460 | 59.7 | VULCAN P<br>ENSACO MS | 19.9<br>19.9 | 0.5 |
| 41 | SCLAIR 11D-1 | 59.7 | ENSACO MS<br>KETJEN EC300 | 35.8<br>4.0 | 0.5 |
| 42 | MARLEX HXM 50100 | 69.7 | KETJEN EC300<br>STATEX N650 | 14.9<br>14.9 | 0.5 |
| 43 | MARLEX HXM 50100 | 69.0 | VULCAN P<br>KETJEN EC300 | 15.0<br>15.0 | 1.0 |
| 44 | MARLEX HXM 50100 | 59.0 | CONDUCTEX 975<br>KETJEN EC300 | 36.0<br>4.0 | 1.0 |

TABLE 2a

| COMPOUND NO | A SURFACE AREA $m^2/g$ | CARBON BLACK | | | 1.5X | | 2.0X | | 3.0X | | WITHIN INV |
|---|---|---|---|---|---|---|---|---|---|---|---|
| | | S PARTICLE SIZE nm | D DBPA D $cm^3/100g$ | D/S | ϱ 25°C ohm.cm | PTC RATIO | ϱ 25°C ohm.cm | PTC RATIO | ϱ 25°C ohm.cm | PTC RATIO | |
| 1 | 140 | 20 | 116 | 5.8 | 6.02 | 3.92 | 5.38 | 2.96 | 4.09 | 1.99 | YES |
| 2 | 140 | 20 | 116 | 5.8 | 1.52 | 5.08 | 1.44 | 3.33 | 1.13 | 2.41 | YES |
| 3 | 140 | 20 | 116 | 5.8 | 1.34 | 10.25 | 1.20 | 6.81 | 1.18 | 4.93 | YES |
| 4 | 140 | 20 | 116 | 5.8 | 2.50 | 11.65 | 2.02 | 11.36 | 2.69 | 6.69 | YES |
| 5 | 140 | 20 | 116 | 5.8 | 4.27 | 5.72 | 3.58 | 4.32 | 3.21 | 3.16 | YES |
| 6 | 140 | 20 | 116 | 5.8 | 1.99 | 5.29 | 1.94 | 4.18 | 1.81 | 2.97 | YES |
| 7 | 157 | 20 | 114 | 5.7 | 5.14 | 4.56 | 4.39 | 3.63 | 4.14 | 2.57 | YES |
| 8 | 157 | 20 | 114 | 5.7 | 2.06 | 14.03 | 1.84 | 12.46 | 1.48 | 8.62 | YES |
| 9 | 125 | 30 | 125 | 4.2 | 3.09 | 2.83 | 2.56 | 2.07 | 2.06 | 1.67 | YES |
| 10 | 250 | 46 | 170 | 3.7 | 1.53 | 2.04 | 1.29 | 1.75 | 1.07 | 1.50 | YES |
| 11 | 45 | 70 | 350 | 5.0 | 4.07 | 5.51 | 2.83 | 6.89 | 3.00 | 3.62 | YES |
| 12 | 45 | 70 | 350 | 5.0 | 2.41 | 4.34 | 1.51 | 2.98 | ----- | ----- | YES |
| 13 | 45 | 70 | 350 | 5.0 | 3.15 | 17.34 | 2.12 | 6.16 | 1.83 | 3.72 | YES |
| 14 | 119 | 19 | 112 | 5.9 | 2.33 | 26.15 | 1.92 | 11.36 | 1.48 | 8.03 | YES |
| 15 | 70 | 40 | 170 | 4.3 | 8.94 | 4.50 | 6.19 | 3.12 | 4.67 | 2.29 | YES |
| 16 | 70 | 40 | 170 | 4.3 | 2.04 | 7.38 | 1.88 | 4.29 | 1.73 | 3.60 | YES |

TABLE 2b

| COMPOUND NO | A SURFACE AREA $m^2/G$ | CARBON BLACK | | | 1.5X | | 2.0X | | 3.0X | | |
|---|---|---|---|---|---|---|---|---|---|---|---|
| | | S PARTICLE SIZE nm | D DBPA D $cm^3/100g$ | D/S | $\rho$ 25°C ohm.cm | PTC RATIO | $\rho$ 25°C ohm.cm | PTC RATIO | $\rho$ 25°C ohm.cm | PTC RATIO | WITHIN INV |
| 17 | 254 | 30 | 178 | 5.9 | 1.36 | 2.06 | 1.31 | 1.59 | 1.02 | 1.45 | YES |
| 18 | 254 | 30 | 178 | 5.9 | 0.82 | 4.0 | 0.74 | 3.19 | 0.63 | 2.45 | YES |
| 19 | 45 | 36 | 105 | 2.9 | 2.70 | 19.20 | 2.10 | 15.57 | 1.65 | 6.48 | YES |
| 20 | 115 | 30 | 100 | 3.3 | 271.93 | 101.51 | 227.0 | 67.4 | 203.0 | 52.9 | NO |
| 21 | 115 | 30 | 100 | 3.3 | 4230 | 5.15 | 5100 | 3.21 | 5400 | 2.27 | NO |
| 22 | 20 | 135 | 130 | 0.96 | 148.0 | 7885 | 131.0 | 2290 | 156.0 | 654 | NO |
| 23 | 20 | 135 | 130 | 0.96 | 66770 | $>10^6$ | 54500 | $>10^6$ | 33880 | $>10^6$ | NO |
| 24 | 36 | 60 | 123 | 2.1 | 505.0 | $>10^6$ | 348.0 | $>10^6$ | 238.0 | $10^4$ | NO |
| 25 | 36 | 60 | 123 | 2.1 | 2920 | 250 | 2340 | 175 | 2170 | 85.3 | NO |
| 26 | 8.5 | 270 | 30 | 0.11 | $>10^8$ | ? | $>10^8$ | ? | $10^8$ | ? | NO |
| 27 | 8.5 | 270 | 30 | 0.11 | $>10^8$ | ? | $>10^8$ | ? | $10^8$ | ? | NO |
| 28 | 30 | 60 | 64 | 1.1 | 352.2 | 130 | 225.4 | 46.1 | 250.1 | 40.0 | NO |
| 29 | 30 | 60 | 64 | 1.1 | 53.5 | 1330 | 39.7 | 183.6 | 36.9 | 145.5 | NO |
| 30 | 1000 | 30 | 400 | 13.3 | 0.54 | 1.30 | ------ | ------ | ------ | ------ | NO |
| 31 | 950 | 30 | 360 | 12.0 | 0.51 | 1.29 | ------ | ------ | ------ | ------ | NO |
| 32 | 950 | 30 | 360 | 12.0 | 0.64 | 1.08 | 0.69 | 1.08 | ------ | ------ | NO |

TABLE 2c

| COMPOUND NO | A SURFACE AREA $m^2/G$ | | CARBON BLACK S PARTICLE SIZE nm | D DBPA D $cm^3/100g$ | D/S | 1.5X ρ 25°C ohm.cm | 1.5X PTC RATIO | 2.0X ρ 25°C ohm.cm | 2.0X PTC RATIO | 3.0X ρ 25°C ohm.cm | 3.0X PTC RATIO | WITHIN INV |
|---|---|---|---|---|---|---|---|---|---|---|---|---|
| 33 | 140 | | 20 | 116 | 5.8 | 33.1 | 16.4 | 21.3 | 11.5 | 18.3 | 7.7 | YES |
| 34 | 140 | | 20 | 116 | 5.8 | 2.89 | 7.2 | 2.36 | 4.8 | 2.02 | 3.3 | YES |
| 35 | 140 | | 20 | 116 | 5.8 | 0.78 | 3.7 | 0.64 | 2.8 | 0.63 | 2.1 | YES |
| 36 | 140<br>950 | 169 | 20<br>30 | 116<br>360 | 6.7 | 3.58 | 2.51 | 2.55 | 2.03 | 2.83 | 1.50 | YES |
| 37 | 140<br>950 | 226 | 20<br>30 | 116<br>360 | 7.9 | 1.19 | 1.74 | 1.12 | 1.62 | 0.99 | 1.34 | YES |
| 38 | 140<br>950 | 169 | 20<br>30 | 116<br>360 | 6.7 | 0.92 | 4.49 | 0.85 | 3.56 | 0.87 | 2.59 | YES |
| 39 | 140<br>950 | 169 | 20<br>30 | 116<br>360 | 6.7 | 1.47 | 3.18 | 1.43 | 3.24 | 1.14 | 2.27 | YES |
| 40 | 140<br>45 | 79 | 20<br>70 | 116<br>350 | 5.2 | 3.68 | 3.36 | 3.15 | 2.55 | 2.44 | 2.06 | YES |
| 41 | 45<br>950 | 61 | 70<br>30 | 350<br>360 | 5.3 | 2.07 | 2.89 | 1.82 | 2.36 | 1.64 | 2.10 | YES |
| 42 | 950<br>36 | 184 | 30<br>60 | 360<br>123 | 5.4 | 1.54 | 2.22 | 1.93 | 1.93 | 1.78 | 1.74 | YES |
| 43 | 140<br>950 | 365 | 20<br>30 | 116<br>360 | 9.52 | 3.0 | 2.5 | 2.28 | 2.1 | 2.45 | 1.8 | YES |
| 44 | 250<br>950 | 286 | 46<br>30 | 170<br>360 | 4.25 | 1.67 | 8.0 | 1.46 | 6.1 | 1.37 | 4.9 | YES |

TABLE 3

| POLYMER RESIN | TYPE | | MFI | SUPPLIER |
|---|---|---|---|---|
| ELVAX 460 | EVA | 18% VA | 2.5 | DU PONT |
| MARLEX HXM 50100 | HDPE | SG 0.95 | 1.6 | PHILLIPS |
| SCLAIR 11D-1 | LLDPE | SG 0.919 | 0.6 | DU PONT CANADA |
| STAMYLEX 2H286 | VLDPE | SG 0 902 | 2.2 | DSM |
| HYTREL 4056 | THERMOPLASTIC POLYESTER ELASTOMER | | 5.3 | DU PONT |

## Claims

**1.** A heat recoverable article comprising a heat recoverable conductive polymer composition comprising:
(a) at least one matrix polymer and

(b) one or more carbon blacks dispersed in said matrix polymer(s) and comprising 15-60% by weight of the polymer composition wherein

(i) the measured surface area (A) of the carbon black, or where there are two or more carbon blacks, the geometric means of the surface areas of the carbon blacks is in the range 40-400 $m^2g^{-1}$, and

(ii) the ratio of the DPBA value (D) in $cm^3$/100g to the average particle size (S) in nm, or where there are two or more carbon blacks, the ratio of the arithmetic mean of their DPBA values to the arithmetic mean of their particle sizes is in the range 2.5 to 10.

**2.** An article as claimed in Claim 1 characterised in that the amount of carbon black is between 25-50 parts by weight.

**3.** An article as claimed in Claim 1 and 2 characterised in that the polymer composition has a resistivity at 25 °C of less than 25 ohm.cm.

**4.** An article according to Claim 1,2 or 3, which exhibits a PTC ratio in the range $1\frac{1}{2}$ to 50, preferably in the range $1\frac{1}{2}$ to 10.

**5.** An article according to Claim 1, 2, 3 or 4, which has been expanded to render it recoverable.

**6.** An article according to any preceding claim which has been expanded from X% to Y% to make it heat recoverable, the resistivity of the composition decreases on expansion, as measured in the direction of current flow, in at least part of the X - Y% expansion range, where X is preferably more than 25.

**7.** An article according to any preceding claims, which has a resistivity which increases on recovery as measured in the direction of current flow, throughout the temperature range 20 °C to $T_e$.

**8.** An article according to any preceding claim, wherein the quantity of carbon black(s) is above the critical filler loading (as hereinbefore defined) for the composition.

**9.** An article according to any preceding claim, wherein the carbon black has a pH in the range 5 - 8, or where there are two or more carbon blacks the mean pH is in the range 5 - 8.

**10.** An article according to any preceding claim, wherein the polymer matrix comprises two or more different polymers, and preferably the or each polymer in the polymer matrix is at least partly crystalline.

**11.** An article according to any preceding claim, which is cross-linked, by chemical cross linking or by irradiation.

**12.** An article according to any preceding claim wherein D/S or $\overline{D}/\overline{S}$ is in the range 2.5 to 7.5.

**13.** An article according to any preceding claim wherein A or $\overline{A}$ is in the range 40 - 300 $m^2g^{-1}$.

## Patentansprüche

**1.** Wärmerückstellbarer Gegenstand, der eine wärmerückstellbare leitfähige Polymerzusammensetzung aufweist, die folgendes aufweist:

(a) mindestens ein Matrixpolymer und

(b) einen oder mehrere Ruße, die in dem Matrixpolymer (den Matrixpolymeren) dispergiert sind und 15 bis 60 Gew.-% der Polymerzusammensetzung aufweisen, wobei

(i) die gemessene Fläche der Oberfläche (A) des Rußes oder bei zwei oder mehreren Rußen die geometrischen Mittel der Oberflächen der Ruße im Bereich von 40 bis 400 $m^2g^{-1}$ liegt und

(ii) das Verhältnis des DPBA-Werts (D) in $cm^3$/100 g zu der mittleren Teilchengröße (S) in nm oder bei zwei oder mehreren Rußen das Verhältnis des arithmetischen Mittels ihrer DPBA-Werte zu dem arithmetischen Mittel ihrer Teilchengrößen im Bereich von 2,5 bis 10 liegt.

**2.** Gegenstand nach Anspruch 1, dadurch gekennzeichnet, daß die Menge von Ruß zwischen 25 und 50 Gewichtsteilen liegt.

**3.** Gegenstand nach Anspruch 1 und 2, dadurch gekennzeichnet, daß die Polymerzusammensetzung einen spezifischen Widerstand bei 25 °C von weniger als 25 Ohm • cm hat.

**4.** Gegenstand nach Anspruch 1, 2 oder 3, der ein PTC-Verhältnis im Bereich von 1,5 bis 50, bevorzugt im Bereich von 1,5 bis 10 hat.

**5.** Gegenstand nach Anspruch 1, 2, 3 oder 4, der aufgeweitet worden ist, um ihn rückstellbar zu machen.

**6.** Gegenstand nach einem der vorhergehenden Ansprüche, der von X % auf Y % aufgeweitet worden ist, um ihn wärmerückstellbar zu machen, wobei der spezifische Widerstand der Zusammensetzung bei Aufweitung, gemessen in der Richtung des Stromflusses, in mindestens einem Teil des X-Y %-Aufweitungsbereichs abnimmt, wobei X bevorzugt größer als 25 ist.

**7.** Gegenstand nach einem der vorhergehenden Ansprüche, der einen spezifischen Widerstand hat, der bei Rückstellung, gemessen in der Richtung des Stromflusses, über den gesamten Temperaturbereich von 20 °C bis $T_e$ zunimmt.

**8.** Gegenstand nach einem der vorhergehenden Ansprüche, wobei die Menge von Ruß(en) über der kritischen Füllstoffbeladung (wie vorstehend definiert) für die Zusammensetzung liegt.

**9.** Gegenstand nach einem der vorhergehenden Ansprüche, wobei der Ruß einen pH-Wert im Bereich von 5 bis 8 hat oder bei zwei oder mehreren Rußen der mittlere pH-Wert im Bereich von 5 bis 8 liegt.

**10.** Gegenstand nach einem der vorhergehenden Ansprüche, wobei die Polymermatrix zwei oder mehrere verschiedene Polymere aufweist und bevorzugt das oder jedes Polymer in der Polymermatrix zumindest teilweise kristallin ist.

**11.** Gegenstand nach einem der vorhergehenden Ansprüche, der durch chemisches Vernetzen oder durch Bestrahlen vernetzt ist.

**12.** Gegenstand nach einem der vorhergehenden Ansprüche, wobei D/S oder $\overline{D}/\overline{S}$ im Bereich von 2,5 bis 7,5 liegt.

**13.** Gegenstand nach einem der vorhergehenden Ansprüche, wobei A oder $\overline{A}$ im Bereich von 40 bis 300 $m^2g^{-1}$ liegt.

## Revendications

**1.** Article susceptible de reprise de forme à chaud, comprenant une composition polymérique conductrice susceptible de reprise de forme à chaud, qui comprend :

(a) au moins une matrice polymérique et

(b) un ou plusieurs noirs de carbone dispersés dans le ou les polymères de la matrice, et constituant 15 à 60 % en poids de la composition polymérique, dans laquelle

(i) la surface spécifique (A) mesurée du noir de carbone, ou lorsqu'il y a deux ou plus de deux noirs de carbone, la moyenne géométrique des surfaces spécifiques des noirs de carbone, se situe dans la plage de 40 à 400 $m^2g^{-1}$, et

(ii) le rapport de la valeur DPBA (D) en $cm^3/100$ g au diamètre moyen (S) des particules en nm, ou bien lorsqu'il y a deux ou plus de deux noirs de carbone, le rapport de la moyenne arithmétique de leurs valeurs DPBA à la moyenne arithmétique de leurs diamètres de particules se situe dans la plage de 2,5 à 10.

2. Article suivant la revendication 1, caractérisé en ce que la quantité de noir de carbone se situe entre 25 et 50 parties en poids.

3. Article suivant les revendications 1 et 2, caractérisé en ce que la composition polymérique a une résistivité à 25 °C de moins de 25 ohms.cm.

4. Article suivant la revendication 1, 2 ou 3, qui présente un rapport CTP dans la plage de 1,5 à 50, de préférence dans la plage de 1,5 à 10.

5. Article suivant la revendication 1, 2, 3 ou 4, qui a été mis en expansion afin de le rendre susceptible de reprise de forme.

6. Article suivant l'une quelconque des revendications précédentes, qui a été mis en expansion de X % à Y % afin de le rendre susceptible de reprise de forme à chaud, la résistivité de la composition diminuant lors de l'expansion, comme mesuré dans la direction de passage du courant, dans une partie au moins de la plage d'expansion X-Y %, X étant de préférence supérieur à 25.

7. Article suivant l'une quelconque des revendications précédentes, dont la résistivité croît lors de la reprise de forme, comme mesuré dans la direction de passage du courant, dans toute la plage de températures de 20 °C à $T_e$.

8. Article suivant l'une quelconque des revendications précédentes, dans lequel la quantité d'un ou plusieurs noirs de carbone est au-dessus de la quantité critique de charge (comme défini ci-dessus) pour la composition.

9. Article suivant l'une quelconque des revendications précédentes, dans lequel le noir de carbone a un pH compris dans la plage de 5 à 8, ou bien lorsqu'il y a deux ou plus de deux noirs de carbone, le pH moyen se situe dans la plage de 5 à 8.

10. Article suivant l'une quelconque des revendications précédentes, dans lequel la matrice polymérique comprend deux ou plus de deux polymères différents, et le polymère ou chaque polymère présent dans la matrice polymérique est de préférence au moins partiellement cristallin.

11. Article suivant l'une quelconque des revendications précédentes, qui est réticulé par réticulation chimique ou par irradiation.

12. Article suivant l'une quelconque des revendications précédentes, dans lequel le rapport D/S ou $\overline{D}/\overline{S}$ se situe dans la plage de 2,5 à 7,5.

13. Article suivant l'une quelconque des revendications précédentes, dans lequel A ou $\overline{A}$ se situe dans la plage de 40 à 300 $m/g^{-1}$.

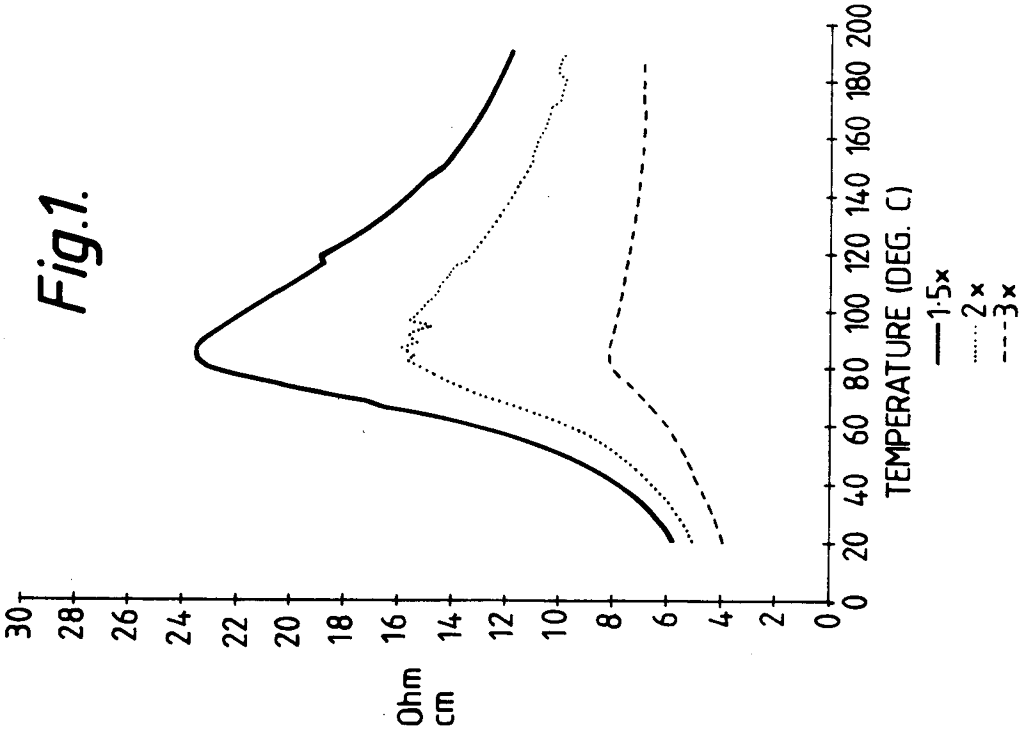


Fig.1.

COMPOUND 1 : ELVAX 460 : VULCAN P 59·4 : 39·6

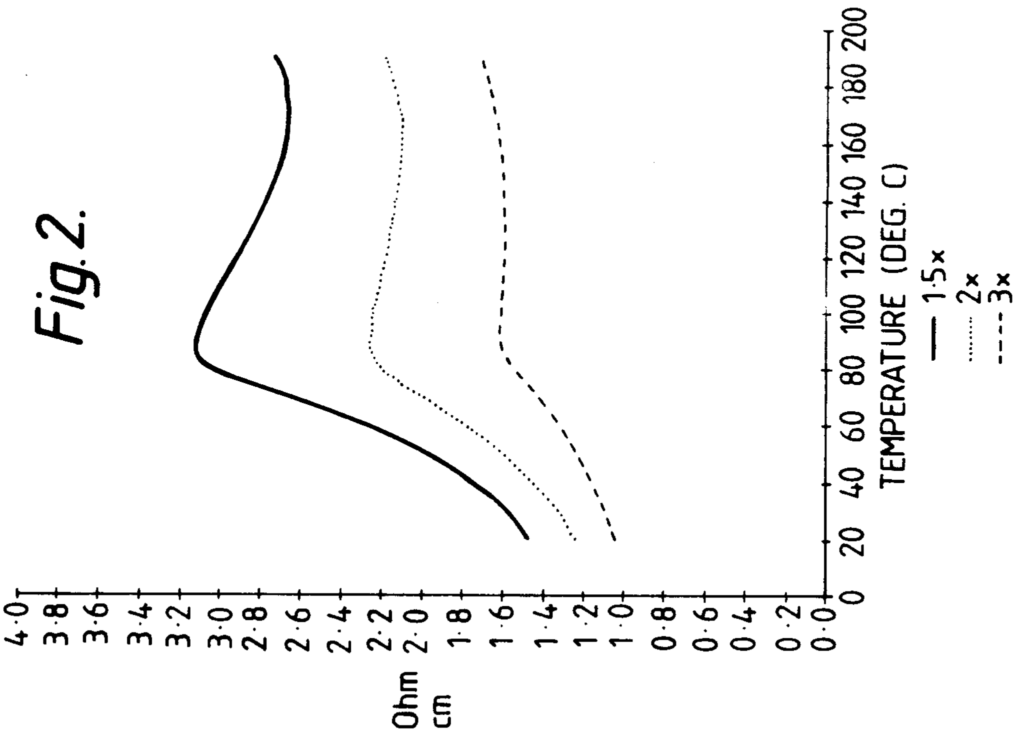


Fig.2.

COMPOUND 10 : ELVAX 460 : CONDUCTEX 975 59·4 : 39·6

Fig.4.

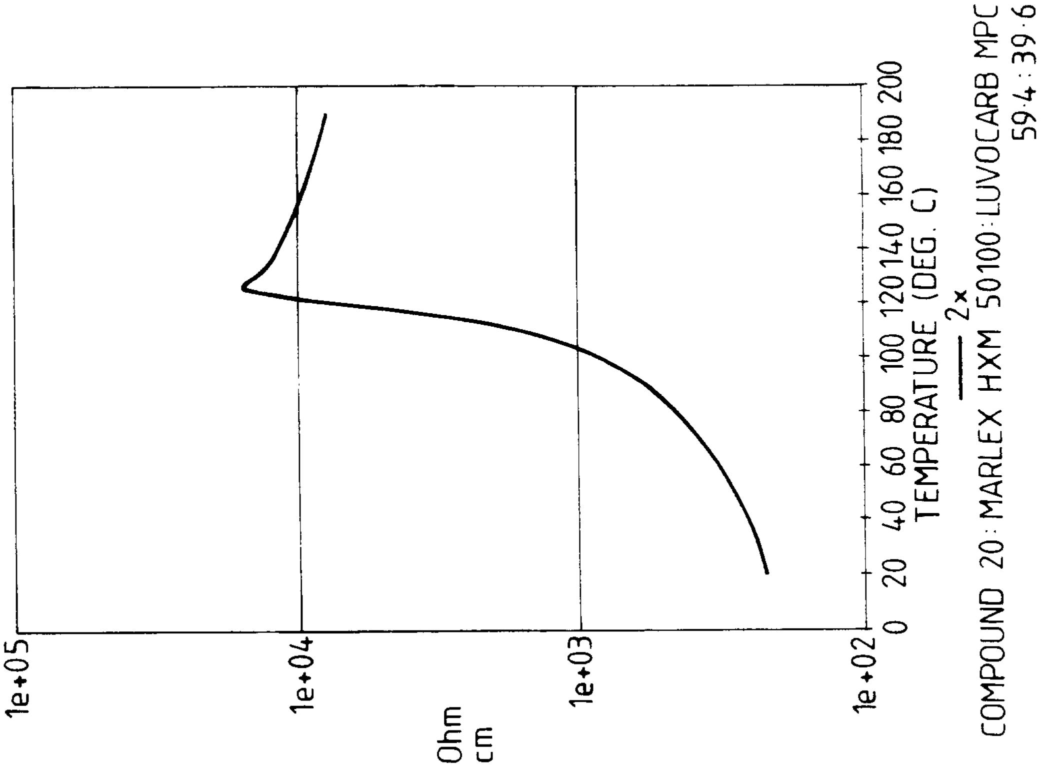
1e+05
1e+04
1e+03
1e+02
Ohm cm
0 20 40 60 80 100 120 140 160 180 200
TEMPERATURE (DEG. C)
2x
COMPOUND 20: MARLEX HXM 50100: LUVOCARB MPC
59·4 : 39·6

Fig.3.

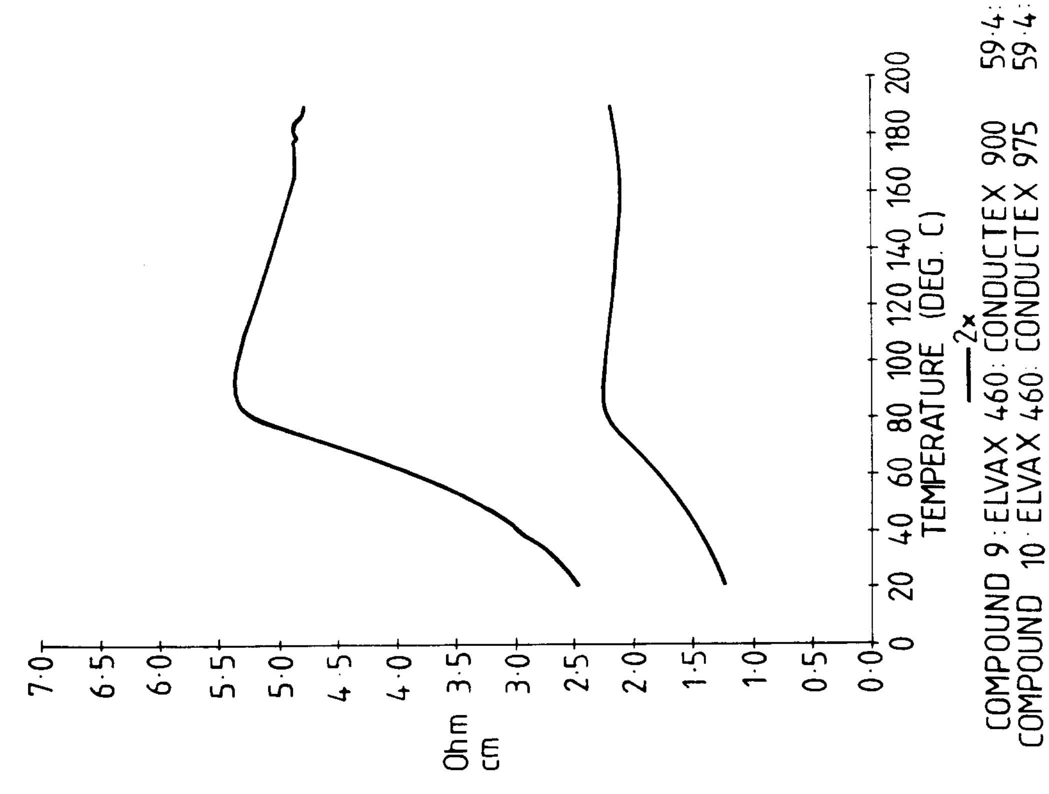
7·0
6·5
6·0
5·5
5·0
4·5
4·0
3·5
3·0
2·5
2·0
1·5
1·0
0·5
0·0
Ohm cm
0 20 40 60 80 100 120 140 160 180 200
TEMPERATURE (DEG. C)
2x
COMPOUND 9: ELVAX 460: CONDUCTEX 900 59·4 : 39·6
COMPOUND 10: ELVAX 460: CONDUCTEX 975 59·4 : 39·6

Fig.5.

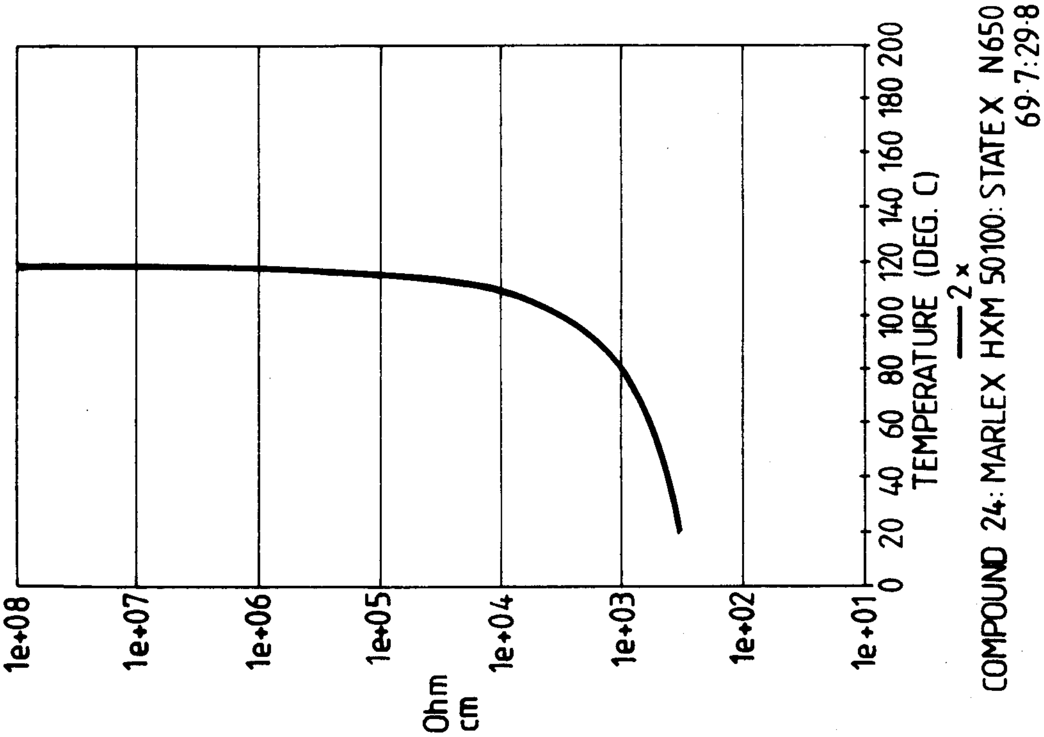
Ohm
cm
1e+08
1e+07
1e+06
1e+05
1e+04
1e+03
1e+02
1e+01
0 20 40 60 80 100 120 140 160 180 200
TEMPERATURE (DEG. C)
2x
COMPOUND 24: MARLEX HXM 50100: STATEX N650
69·7:29·8

Fig.6.

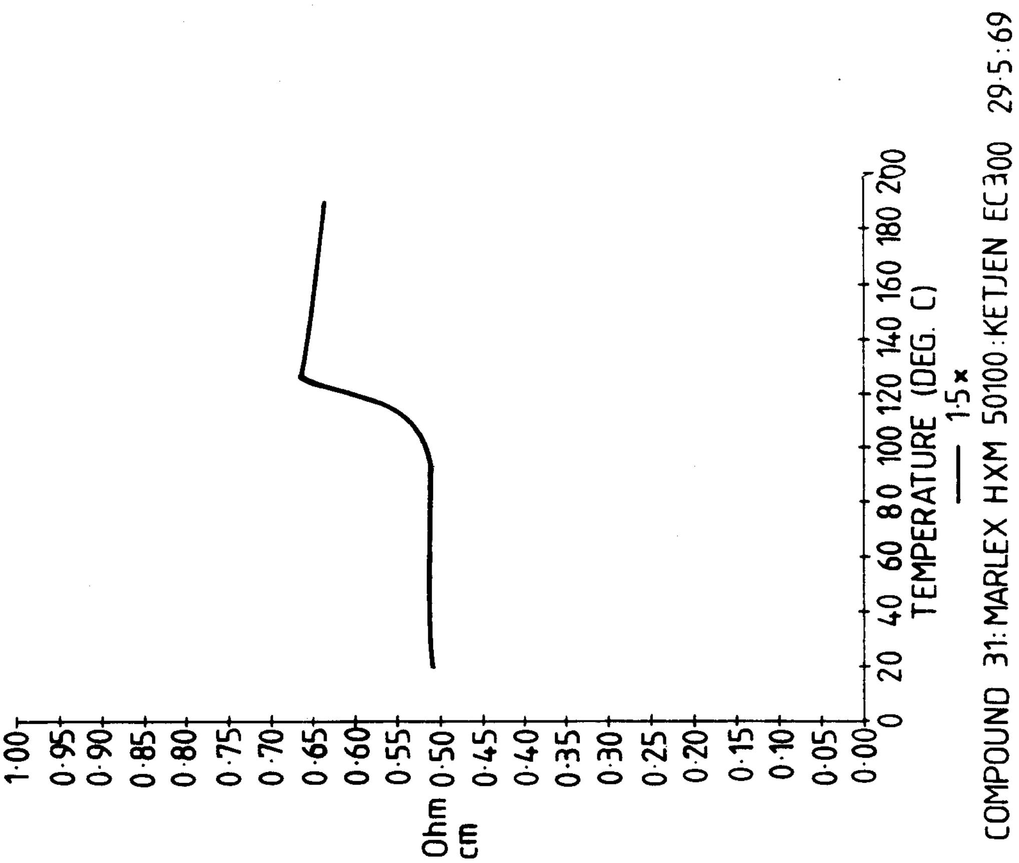
Ohm
cm
1·00
0·95
0·90
0·85
0·80
0·75
0·70
0·65
0·60
0·55
0·50
0·45
0·40
0·35
0·30
0·25
0·20
0·15
0·10
0·05
0·00
0 20 40 60 80 100 120 140 160 180 200
TEMPERATURE (DEG. C)
1·5x
COMPOUND 31: MARLEX HXM 50100: KETJEN EC300 29·5:69

Fig.7.

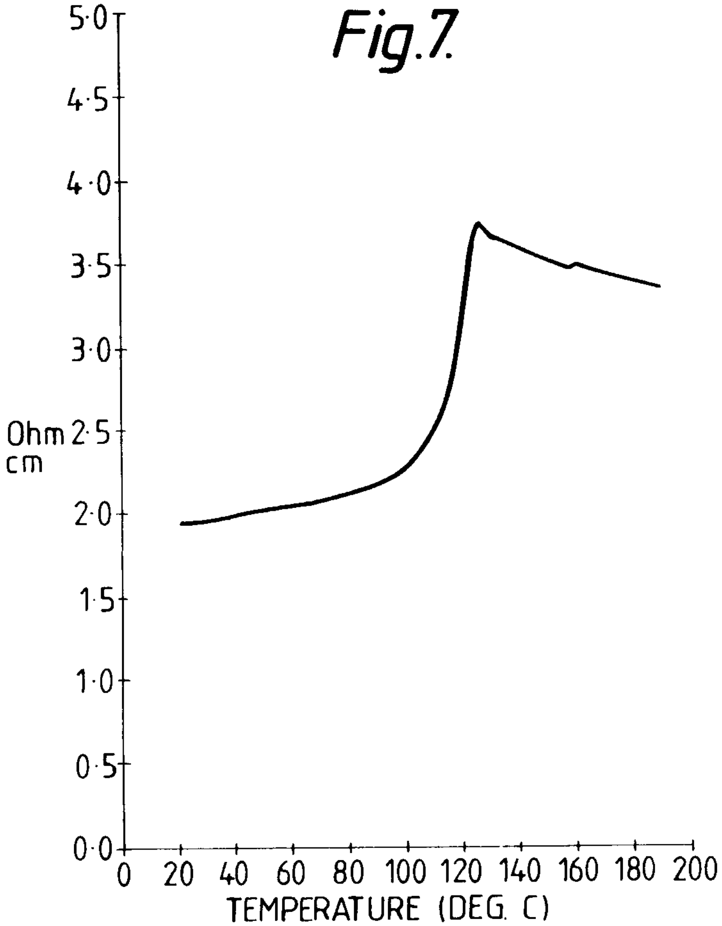


COMPOUND 42:
MARLEX HXM 50100 : KETJEN EC300 : STATEX N650
69·7 : 14·9 : 14·9

Fig.8.

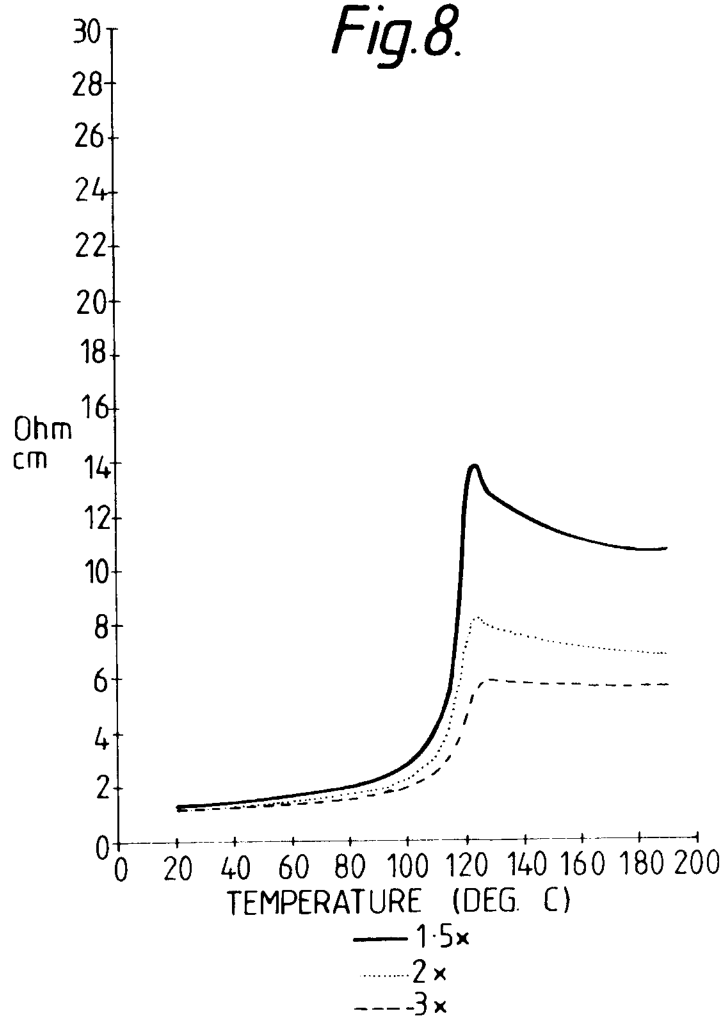


COMPOUND 3: MARLEX HXM 50100 : VULCAN P 59 4 : 39·6

Fig.9.

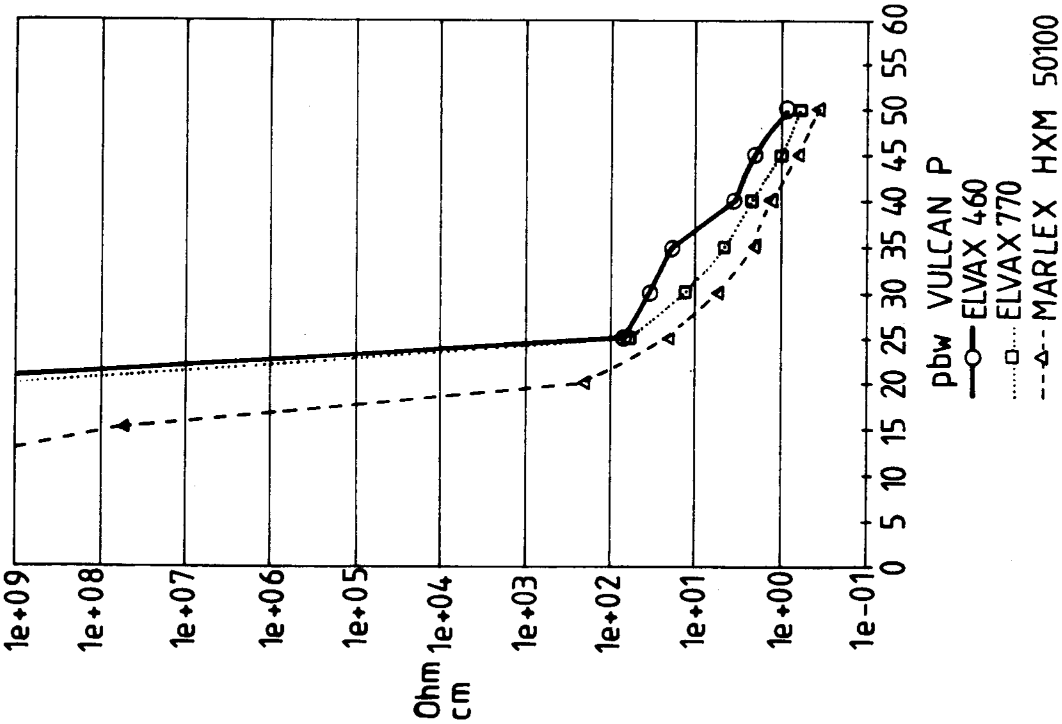
1e+09
1e+08
1e+07
1e+06
1e+05
1e+04
1e+03
1e+02
1e+01
1e+00
1e-01
Ohm
cm
0 5 10 15 20 25 30 35 40 45 50 55 60
pbw VULCAN P
ELVAX 460
ELVAX770
MARLEX HXM 50100

Fig.10.

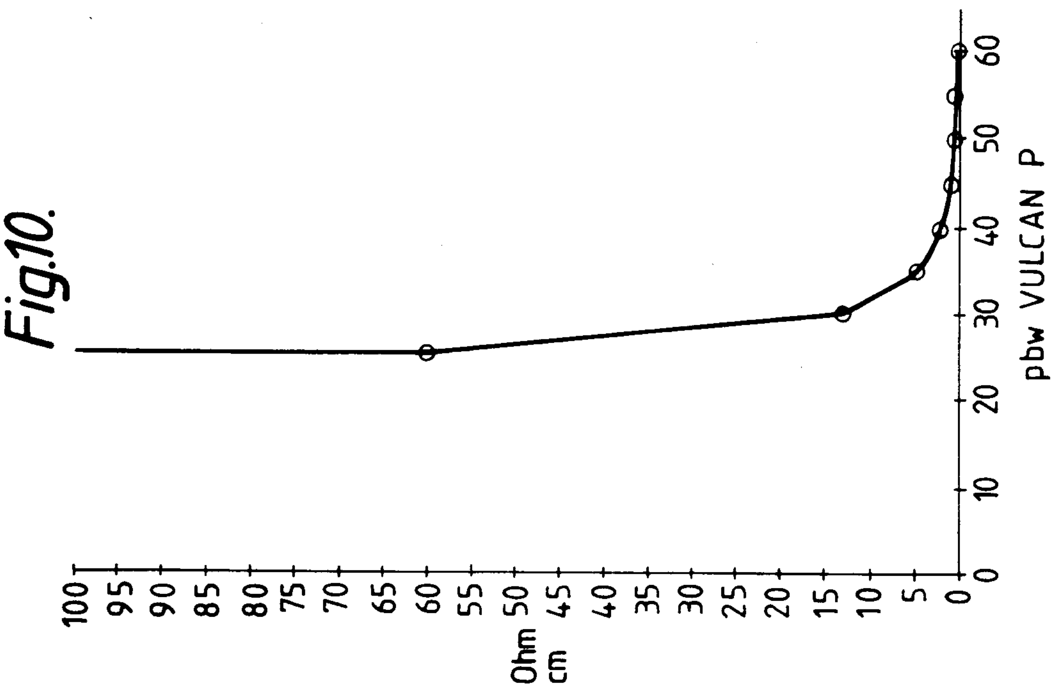
100 95 90 85 80 75 70 65 60 55 50 45 40 35 30 25 20 15 10 5 0
Ohm
cm
0 10 20 30 40 50 60
pbw VULCAN P